# EUROPÄISCHE PATENTSCHRIFT

(11) **EP 2 098 763 B1**
(45) Veröffentlichungstag und Bekanntmachung des Hinweises auf die Patenterteilung: **26.06.2013**
(21) Anmeldenummer: 09153794.4
(22) Anmeldetag: 26.02.2009
(51) Int. Cl.: F16H 63/34, F16H 63/48

(54) **Verfahren zur Steuerung eines automatisierten Antriebsstrangs für Kraftfahrzeuge und Antriebsstrang dafür**
Method for controlling an automated drive train of a motor vehicle and drive train thereof
Procédé de commande d'un train d'entraînement automatisé pour véhicules automobiles et train d'entraînement associé

(30) Priorität: 04.03.2008 DE 102008014271
(43) Veröffentlichungstag der Anmeldung: 09.09.2009
(73) Patentinhaber: GETRAG Getriebe- und Zahnradfabrik Hermann Hagenmeyer GmbH & Cie KG, 74199 Untergruppenbach (DE)
(72) Erfinder: Rühle, Günther, 74369 Löchgau (DE); Kießling, Hannes, 71711 Steinheim (DE); Zahn, Jörg, 71155 Altdorf (DE); Nixdorf, Wolfram, 74232 Abstatt (DE)
(74) Vertreter: Witte, Weller & Partner

(56) Entgegenhaltungen:
- DE-A1- 4 316 784
- DE-A1-102004 058 332
- DE-A1-102006 012 343
- JP-A- 2002 295 657
- US-A1- 2006 270 521
- US-A1- 2007 135 261
- US-B1- 6 279 713

## Beschreibung

Die Erfindung betriff ein Verfahren zur Steuerung eines automatisierten Antriebsstrangs gemäß dem Oberbegriff des Anspruchs 1, wie es aus dem Dokument JP 2002 295657 A bekannt.

Die Erfindung betrifft ein generall Verfahren zur Steuerung eines automatisierten Antriebsstrangs für Kraftfahrzeuge, wobei der Antriebsstrang ein Getriebe mit mindestens einer Getriebeeingangswelle aufweist, die mit einem Motor des Kraftfahrzeugs und mit einer Getriebeausgangswelle verbindbar ist, die mit Antriebsrädern des Kraftfahrzeugs verbunden werden kann, wobei der Antriebsstrang einen Parksperrenmechanismus aufweist, mittels dessen eine insbesondere formschlüssige Verbindung zwischen dem Antriebsstrang und einem feststehenden Abschnitt des Kraftfahrzeugs (z.B. Getriebegehäuse, Achsgetriebegehäuse, PTU- Gehäuse, etc.) eingerichtet werden kann.

In der Regel ist das Parksperrenrad eines Parksperrenmechanismus auf der Getriebeabtriebswelle oder auf einer mit ihr in Verbindung stehenden Welle angeordnet. Wird das Fahrzeug am Hang abgestellt, so wird das Parksperrenrad mit einem Drehmoment, das sich aus der Hangabtriebskraft ergibt, beaufschlagt. Das Drehmoment wird über eine Klinke am Gehäuse abgestützt. Der Abtriebstrang zwischen Parksperrenrad und Fahrzeugrad wird aufgrund des Drehmoments belastet, d. h. der Abtriebstrang wird tordiert und speichert infolge seiner Steifigkeit potenzielle Energie. Wird nun die Parksperre ausgelegt, d. h. der Klinkenzahn an der Lücke des Parksperrenrads außer Eingriff gebracht, entspannt sich der Abtriebstrang schlagartig. Bei Vorgelegewellengetrieben werden dann alle mit der Abtriebswelle in Verbindung stehenden Getriebeelemente schlagartig beschleunigt. Dies erzeugt ein sehr lautes gut wahrnehmbares schlagartiges Geräusch (metallischer Schlag), das vom Fahrer negativ interpretiert werden kann, da er annehmen muss, es sei ein Schaden im Getriebe aufgetreten.

Es ist die Aufgabe der vorliegenden Erfindung, ein Verfahren zur Steuerung eines automatisierten Antriebsstrangs derart auszubilden, dass die Schaltgeräusche der Parksperre auf ein Minimum reduziert werden können.

Die Aufgabe wird durch ein Steuerungsverfahren gemäß dem Oberbegriff des Anspruchs 1 gelöst.

Aus dem Stand der Technik ist eine Parksperre für automatische Getriebe von Kraftfahrzeugen mit einem durch einen Handwählhebel schaltbaren Parksperrenmechanismus bekannt (DE 41 27 991 C2). Der Parksperrenmechanismus besteht aus einer axial im Wesentlichen in eine geschlossene und eine offene Parksperrenposition verschiebbaren Betätigungsstange, die mit einer Parkklinke und einem Parkzahnrad zusammenwirkt, die im Getriebegehäuse angeordnet sind. Die Betätigungsstange ist gleichzeitig die Kolbenstange eines ebenfalls im Inneren des Getriebegehäuses angeordneten, einfach wirkenden Zylinders, der in drucklosem Zustand die Betätigungsstange vorgeschoben, also die Parksperre über eine Feder geschlossen hält und bei Druckbeaufschlagung diese öffnet.

Mit Hilfe des vorgelegten, erfindungsgemäßen Verfahrens werden die bisher auftretenden sehr lauten und unerwünschten Schaltgeräusche des Parksperrenmechanismus ausgeschaltet bzw. auf ein Minimum reduziert. Diese traten bisher immer dann auf, wenn das Fahrzeug bei nicht angelegter Feststellbremse am Hang abgestellt wurde. Die bisher üblichen Verspannungen des Triebstrangs beim Abstellen des Kraftfahrzeugs am Hang und die dadurch erzeugten Hangabtriebskräfte waren der Grund der lauten Schaltgeräusche im Parksperrenmechanismus.

Mit Hilfe des erfindungsgemäßen Verfahrens werden diese Geräusche im Antriebstrang gedämpft und der Parksperrenmechanismus kann zum Auslegen freigegeben werden.

Vorteilhaft ist es, wenn eine vor und/oder während des Deaktivierungsvorgangs des Parksperrenmechanismus auftretende Entspannungsbewegung durch Einlegen einer Gangstufe des Getriebes gedämpft wird und ein die Entspannungsbewegung dämpfendes Gegenmoment in den Antriebsstrang eingeleitet wird.

Die Entspannungsbewegung kann hierbei "passiv" über Schleppmomente gedämpft werden, bspw. an der getriebeeingangsseitigen Trennkupplung.

Eine weitere Möglichkeit besteht darin, über ein kurzzeitiges Anlegen der Kupplung in Richtung Schließen die beim Öffnen der Parksperre entstandenen Schwingungen des gesamten Antriebsstranges zu dämpfen. Während dieser kurzen Ankuppelphase, in der die laufende VKM über eine schleifende Kupplung mit Getriebe und weiterem Abtrieb verbunden ist, wird die Parksperre gelöst. Die schleifende Kupplung selbst trägt wesentlich zur Geräuschdämpfung bei, indem die Verspannung des Antriebsstranges über einen längeren Zeitraum hinweg (ca. 0,05 bis 1,5 sec, insbesondere 0,05 bis 0,8 sec) abgebaut werden kann.

Gemäß der Erfindung, weist der Antriebsstrang einen Verbrennungsmotor auf, der einen Verbrennungsmotor aufweist, der über eine Kupplung mit dem Getriebe verbindbar ist, wobei vor und/oder während des Deaktivierungsvorgangs des Parksperrenmechanismus bei laufendem Verbrennungsmotor die Kupplung so betätigt wird, dass dadurch über die Kupplung ein "aktives" Drehmoment in den Antriebsstrang eingeleitet werden kann.

Durch eine gezielt herbeigeführte Entspannung des Antriebstrangs bei gleichzeitigem Aufbau eines durch die Motorkraft erzeugten Gegenmoments wird das unerwünschte, laute Knacken im Triebstrang eliminiert. Anschließend kann sofort mit dem beabsichtigten Zielgang angefahren werden, der in vorteilhafter Weise dem zur Triebstrangentspannung vorgewählten Gang entspricht.

Vorteilhaft ist es ferner, wenn vor und/oder während des Deaktivierungsvorgangs des Parksperrenmechanismus eine Gangstufe des Getriebes eingelegt wird und dadurch der Parksperrenmechanismus mit dem über die Kupplung eingeleiteten Gegenmoment beaufschlagt wird.

Hierdurch kann eine Verbindung zwischen Kupplung und Parksperrenmechanismus eingerichtet werden.

Gemäß einer besonders bevorzugten Ausführungsform wird je nach Richtung der auftretenden Entspannungsbewegung oder Verspannungsenergie eine Rückwärts- oder Vorwärtsgangstufe des Getriebes eingelegt. Hierdurch ist immer sichergestellt, dass die bisher unangenehmen Schaltgeräusche nicht mehr auftreten, ganz gleich, wie das Fahrzeug abgestellt ist.

Das beschriebene unangenehme Auslegegeräusch der Parksperre zu verhindern, ist jedoch unabhängig davon, ob das Drehmoment der schlupfenden Kupplung in Richtung Entspannung oder Verspannung des Triebsstranges wirkt. Entscheidend ist nur, dass das Drehmoment der Kupplung den Schlupfzustand nicht überschreitet und somit kurzzeitige Drehzahlschwankungen seitens des Abtriebsstranges nicht auf den Antriebsmotor zurückwirken können. Auf diese Weise bleibt die dämpfende Wirkung der Kupplung erhalten. Wenn also die Kupplung nur gering über dem sog. Kisspoint gehalten wird, ist das Schlupfmoment deutlich kleiner als das Verspannungsmoment. Es hat somit bei schlupfender Kupplung in jedem Fall eine dämpfende Wirkung auf den Triebstrang.

Von Vorteil ist daher, wenn die Kupplung mit Hilfe einer Getriebesteuerung so betätigt wird, dass sie in einen Schlupfzustand versetzt wird. Mit Hilfe der Getriebesteuerung lassen sich auf sehr einfache Weise Fahrzeugsituationen schnell und sicher detektieren und dadurch vor und/oder während des Deaktivierungsvorgangs des Parksperrenmechanismus die notwendigen Maßnahmen treffen, sodass die Schaltgeräusche des Parksperrenmechanismus ausgeschaltet bzw. auf ein Minimum reduziert werden.

Der entscheidende Vorteil ist, dass die Kupplung so betätigt werden kann, dass das Gegenmoment über den im Leerlauf laufenden Verbrennungsmotor erzeugt werden kann, ohne dass in dessen Leerlaufregelung eingegriffen werden muss.

Da das Getriebe mit der Getriebesteuerung in Wirkverbindung steht, kann beim Lösen der Parkbremse des Sperrmechanismus mit Hilfe von Sensoren der Getriebesteuerung eine Vorspannung und/oder eine Längsneigung des Fahrzeugs erfasst werden, damit je nach Stellung des Kraftfahrzeugs zumindest eine entsprechende Kupplung zum Einlegen eines Gangs des Getriebes geschaltet werden. Beim Lösen der bekannten Parkbremse wurde die Nase der Parksperrenklinke aus der Lücke des Parksperrenrads gezogen und dadurch entspannte sich der Triebstrang mit einem lauten Knackgeräusch, das den Fahrer einen vermeintlichen Schaden im Getriebe signalisierte. Die Parkbremse wird im Normalfall nur bei laufendem Motor ausgelegt. Durch den vorteilhaften Einsatz der Getriebesteuerung kann die Verspannung oder die Längsneigung des Fahrzeugs sensorisch erkannt und daraufhin über die Getriebesteuerung der erste Gang oder Rückwärts-Gang einlegt werden. Ferner wird, je nach Vorwärts- oder Rückwärtsneigung des Kraftfahrzeugs, auf ein entsprechendes Schlupfmoment eingestellt, z. B. in der Nähe des Kisspoints. Dadurch wird durch den Aufbau eines entsprechenden Gegenmoments die Verspannung im Triebstrang gelöst. Ist der Triebstrang entlastet, kann die Parksperre ausgelegt werden. Vorteilhaft ist es, wenn dann mit dem Zielgang angefahren wird, der dem zur Triebstrangentlastung vorgewählten Gang entspricht.

Bevorzugt ist für die vorliegende Erfindung, wenn der Antriebsstrang eine elektrische Maschine aufweist, die das Gegenmoment zumindest teilweise erzeugt. Hierzu kann der Motor auch als Hybridmotor ausgebildet sein.

Im Zusammenhang mit der erfindungsgemäßen Ausbildung und Anordnung wird der Antriebsstrang vor und/oder während des Deaktivierungsvorgangs des Parksperrenmechanismus in Abhängigkeit der Neigung des Kraftfahrzeugs betätigt. Vorteilhaft ist es folglich, wenn die Höhe des Gegenmoments an die Größe der Steigung angepasst werden kann, z. B. durch den Schlupf der Kupplung und somit durch das vom Motor übertragene Moment.

Es ist weiterhin von Vorteil für ein zügiges Anfahren am Hang, wenn sofort nach Einlegen des beabsichtigten Zielganges die Reibkupplung eine gewisse kurze Zeitspanne (ca. 0,05 bis 1,5 sec, insbesondere 0,05 bis 0,8 sec) im Schlupfzustand beharrt, um der Getriebesteuerung die Möglichkeit zu geben, die Parksperre auszulegen. Die Dauer der Einhaltung des Schlupfzustandes hängt dabei in erster Linie von der Höhe der Drehmoment verursachenden Hangabtriebskraft ab.

Es ist von Vorteil, wenn der Antriebsstrang ein automatisiertes Stufengetriebe in Vorgelegebauweise aufweist.

Besonders bevorzugt ist es ferner, wenn der Antriebsstrang einen Neigungssensor zur Erfassung einer Längsneigung des Kraftfahrzeugs aufweist. Hierdurch wird auf einfache Weise die Parkstellung des Fahrzeugs detektiert und die hierzu notwendige Gangstufe im Getriebe und/oder der Schlupf der Kupplung eingestellt.

Ferner weist wenn der Antriebsstrang den Verbrennungsmotor auf, der über eine solche Kupplung mit dem Getriebe verbindbar ist. Anstelle eines Verbrennungsmotors kann der Antriebsstrang auch einen Hybridantrieb oder eine elektrische Maschine aufweisen, die dafür ausgelegt ist, ein Drehmoment in den Antriebsstrang einzuleiten.

Vorteilhaft ist es außerdem, wenn im Getriebegehäuse im Bereich der Getriebeausgangswelle der Sperrmechanismus mit einer Parksperre und mit einem verstellbaren Sperrelement angeordnet ist, das die Getriebeausgangswelle drehfest mit dem Getriebegehäuse verbinden kann, wobei die auf den Sperrmechanismus wirkende Vorspannung oder Momentbelastung dann reduziert bzw. eliminiert wird, wenn der Sperrmechanismus ausgeschaltet werden soll und während dieses Schaltvorgangs der Endantriebsstrang des Getriebes torsionsentlastet wird, wobei hierzu zumindest ein Gang des Getriebes eingelegt ist.

Vorteilhaft ist es auch, wenn auf einer im Getriebegehäuse vorgesehenen Achse das Sperrelement schwenkbar gelagert ist, das mit der Parksperre in Sperrstellung gebracht werden kann. Eine derart ausgebildete Parksperre lässt sich auf einfache Weise in dem Getriebe platzsparend unterbringen.

Vorteilhaft ist es auch, wenn die Parksperre auf der Getriebeausgangswelle mit Bezug auf den Kraftfluss des Getriebes zwischen einer letzten schaltbaren Kupplung und/oder einem letzten ständig in Eingriff stehenden Zahnradpaar und einer Gehäusewand des Getriebegehäuses vorgesehen ist, wobei das eine Zahnrad auf der Getriebeausgangswelle und das andere Zahnrad auf einer Vorgelegewelle drehfest angeordnet ist.

In weiterer Ausgestaltung der Erfindung ist es von Vorteil, wenn das Sperrelement, das mit der Parksperre in Eingriff gebracht werden kann, im Getriebegehäuse schwenkbar aufgenommen ist und ein hervorstehendes Sperrteil aufweist, das in eine von zahlreichen Vertiefungen der Parksperre einrasten kann.

Vorteilhaft ist es auch, wenn jeweils eine Kupplung einer Doppelkupplung mit einer Getriebeeingangswelle verbunden ist, die über wenigstens ein schaltbares Zahnradpaar mit der Vorgelegewelle in Antriebsverbindung steht, die über ein nicht schaltbares Zahnradpaar mit der Getriebeausgangswelle und/oder dem Sperrmechanismus in Antriebsverbindung steht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine schematische Ansicht eines Getriebes mit einer Doppelschaltkupplung für ein Fahrzeug sowie eine der Abtriebswelle zugeordnete Parksperre;
- Fig. 2: eine schematische Detailansicht einer Parksperre in größerer perspektivischer Ansicht.

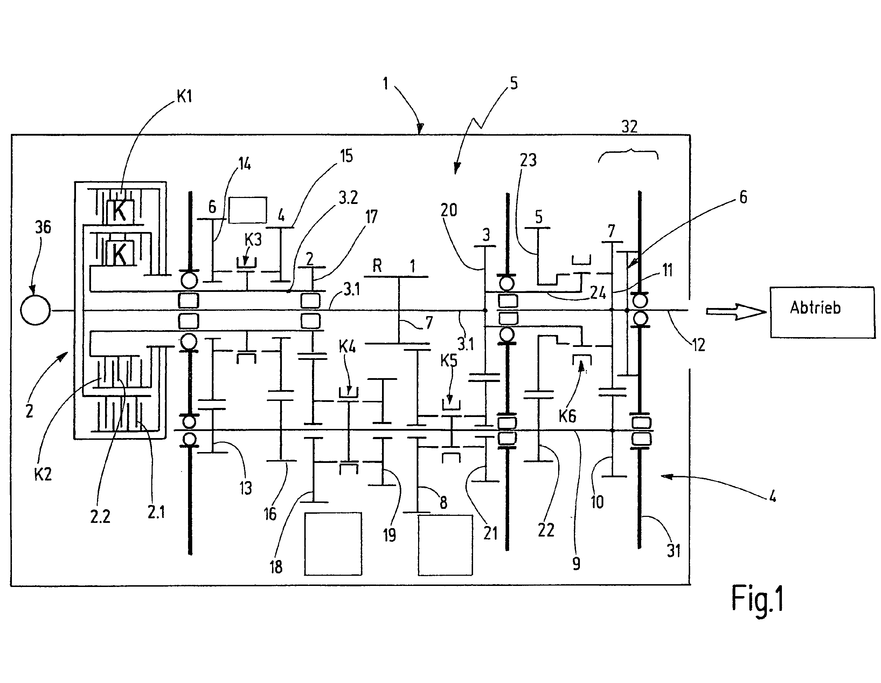

In Fig. 1 ist mit 1 generell ein Kraftfahrzeug mit einem Antriebsstrang bezeichnet, das ein Personenkraftwagen sein kann, es kann sich aber auch um einen Nutzkraftwagen, ein Motorrad oder ein ähnliches Fahrzeug handeln.

Das erfindungsgemäße Verfahren wird nachstehend anhand eines beispielhaften Antriebsstrangs mit Doppelkupplungsgetriebe erläutert. Das Verfahren ist jedoch auch auf andere Antriebsstränge anwendbar, die bspw. ein automatisiertes Schaltgetriebe (ASG) oder einen Wandlerautomaten beinhalten.

Der Antriebsstrang weist ein Getriebe 5 mit einer Doppelkupplung 2 auf, die mit einem in der Zeichnung schematisch dargestellten Verbrennungsmotor 36 und mit einer Antriebswelle 3.1 sowie einer auf dieser gelagerten Hohlwelle bzw. zweiten Antriebswelle 3.2 antriebsverbindbar ist. Anstelle eines Verbrennungsmotors kann auch ein Elektro- oder ein Hybridantrieb eingesetzt werden.

Die Doppelkupplung 2 weist eine schaltbare erste Kupplung 2.1 (K1) und eine schaltbare zweite Kupplung 2.2 (K2) auf. Die Abtriebsseite steht also, je nach Kupplungsstellung, entweder über die Kupplung 2.1 mit der Getriebeeingangswelle 3.1 oder über die Kupplung 2.2 mit der Getriebeeingangswelle 3.2 in Antriebsverbindung. Details und Funktionsweise eines solchen Getriebes sind in der DE 10 2005 005 338 beschrieben, auf die vorliegend Bezug genommen wird.

Das Kraftfahrzeug 1 ist in Fig. 1 der Einfachheit halber als rechteckiger Kasten schematisch angedeutet.

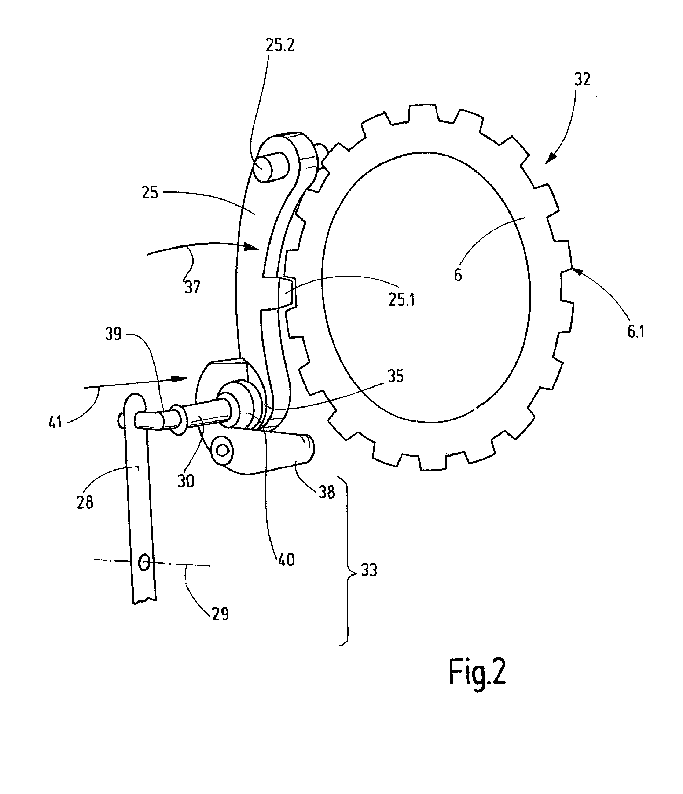

Die beiden Antriebswellen 3.1 und 3.2 erstrecken sich in Längsrichtung durch ein in Fig. 3 nur zum Teil dargestelltes Getriebegehäuse 4. Das Getriebegehäuse 4 dient auch zur Aufnahme eines Sperrmechanismus 32 mit einer Parksperre (z. B. Sperrenrad) 6 und einem verstellbaren Sperrelement (z. B. Klinke) 25 (z. B. gemäß Fig. 2). Das Sperrelement 25 ist mit Hilfe einer im Getriebegehäuse 4 vorgesehenen Achse 25.2 schwenkbar gelagert und kann mit der Parksperre 6 in Sperrstellung gebracht werden kann. Hierzu weist das Sperrelement 25 ein hervorstehendes Sperrteil (Nase) 25.1 auf, das in eine der zahlreichen am Außenumfang der Parksperre 6 vorgesehenen, sich radial zu einer Getriebeausgangswelle 12 erstreckenden Vertiefungen 6.1 einrasten kann und dadurch die Parksperre 6 am Getriebegehäuse 4 bzw. einer Gehäusewand 31 des Getriebegehäuses 4 festlegt. Die Parksperre 6 ist auf der Getriebeausgangswelle 12 drehfest angeordnet. Wird also das Sperrelement 25 mit der Parksperre 6 in Eingriff gebracht, ist die Getriebeausgangswelle 12 blockiert und kann nicht weiterdrehen.

Der in Fig. 2 schematisch dargestellte Sperrmechanismus 32 umfasst zum Verstellen des Sperrelements 25 eine im Getriebegehäuse 4 vorgesehene Stellvorrichtung 33, mit deren Hilfe das Sperrelement 25 von der Parksperre 6 weg oder zur Parksperre 6 hin geschwenkt werden kann.

Die Stellvorrichtung 33 weist einen Schwenkhebel 28 auf, der im Getriebegehäuse 4 auf einer am Getriebegehäuse 4 befestigten Achse 29 schwenkbar gelagert ist und über ein Gestänge 39 automatisiert oder auch manuell verstellbar ist. An dem Gestänge 39 ist ein Sperrabschnitt 40 mit einem in der Zeichnung nicht weiter sichtbaren Kegelabschnitt 35 angeordnet, der sich in Richtung der Parksperre 6 verjüngt und beim Verstellen des Gestänges 39 in Pfeilrichtung gemäß Pfeil 41 am unteren Ende des Sperrelements 25 vorbeischiebt, dabei gegen das untere Ende des Sperrelements 25 zur Anlage kommt und somit das Sperrelement 25 gemäß Pfeil 37 in Richtung der Parksperre 6 schwenkt. Hierdurch kann das Rastelement 25.1 in eine der Vertiefungen 6.1 der Parksperre 6 einrasten und die Sperrwirkung zwischen der Parksperre 6 und dem Sperrelement 25 herstellen. Dabei stützt sich der Sperrabschnitt 40 gegen ein am Getriebegehäuse 4 angeordnetes Widerlager 38 ab. Ein unbeabsichtigtes Lösen des Rastelements 25.1 aus der Vertiefung 6.1 ist hierdurch ausgeschlossen.

Das Sperrelement 25 wird durch eine auf dem Gestänge 39 angeordnete Einrastfeder 30 in Richtung der Sperrposition bzw. der Parksperre 6 gemäß Fig. 3 vorgespannt und in Sperrstellung gehalten. Die Vorspannung, die durch die Einrastfeder 30 ausgeübt wird, ist so groß, dass das Sperrelement 25 mit dem Rastelement 25.1 dann in Sperrstellung gedrückt wird, wenn das Rastelement 25.1 gegenüber einer der Vertiefungen 6.1 der Parksperre 6 liegt.

In dem Ausführungsbeispiel gemäß Fig. 1 bis 2 ist der Parksperrenmechanismus 6 auf der Abtriebs- bzw. Getriebeausgangswelle 12 angeordnet bzw. steht mit dieser in Wirkverbindung. Der Parksperrenmechanismus kann jedoch auch im Bereich der Kardanwelle oder des Achsgetriebes angeordnet sein.

Wie aus Fig. 1 hervorgeht, ist die Doppelkupplung 2 mit einer ersten Kupplung K₁ und einer zweiten Kupplung K₂ ausgestattet. Die eine Kupplung K₁ der Doppelschaltkupplung 2 ist mit einer zweiten Getriebeeingangswelle 3.1 und die Kupplung K₂ mit der Getriebeeingangswelle 3.2 antriebsverbunden, die hier als Hohlwelle ausgebildet ist und auf der Getriebeeingangswelle 3.1 drehbar lagert. Einige der Getriebeschaltstellungen sind nachstehend beschrieben.

Das Getriebe 5 weist Radsätze für die Gangstufen 2, 4 und 6 auf, die einem zweiten Teilgetriebe und der zweiten Getriebeeingangswelle 3.2 zugeordnet sind. Der Radsatz für den sechsten Gang beinhaltet Zahnräder 14, 13. Der Radsatz für den vierten Gang beinhaltet Zahnräder 15, 16, und der Radsatz für den zweiten Gang beinhaltet Zahnräder 17, 18. Die Zahnräder 14, 15 sind auf der zweiten Getriebeeingangswelle 32 drehbar gelagert und mittels einer Schaltkupplung K₃ alternativ mit dieser verbindbar, um die entsprechenden Gangstufen einzurichten.

Der ersten Getriebeeingangswelle 3.1 (und somit dem ersten Teilgetriebe) sind die Gangstufen 1, 3, 5, 7 und R zugeordnet. Ein Radsatz für die Gangstufe 2 beinhaltet Zahnräder 17, 18. Ein Radsatz für die Gangstufe 1 beinhaltet Zahnräder 7, 8. Ein Radsatz für die Rückwärtsgangstufe R beinhaltet das Zahnrad 7, ein nicht dargestelltes Umkehrrad sowie ein Zahnrad 19. Der Radsatz für die Gangstufe 3 beinhaltet Zahnräder 20, 21, und der Radsatz für die Gangstufe 5 beinhaltet Zahnräder 23, 22.

Zwischen den Radsätzen für die Gangstufen 2, R ist eine weitere Schaltkupplung K₄ angeordnet, und zwar an der Vorgelegewelle 9. Zwischen den Radsätzen für die Gangstufen 1 und 3 ist eine weitere Schaltkupplung K₅ angeordnet, und zwar an der Vorgelegewelle 9.

Das Getriebe 5 ist mit einer Abtriebskonstanten ausgebildet, die die Vorgelegewelle 9 fest mit der Getriebeausgangswelle 12 verbindet. Dieser Abtriebskonstantenradsatz beinhaltet Zahnräder 10, 11 und ist als Direktgang für eine Gangstufe 7 eingerichtet.

Zwischen den Radsätzen für die Gangstufen 5 und 7 ist eine weitere Schaltkupplung K₆ angeordnet, und zwar an einem Hohlwellenabschnitt der ersten Getriebeeingangswelle 3.1, der einen sich nach vorne erstreckenden und an einem Lagerschild abstützenden Abschnitt der Getriebeausgangswelle 12 umschließt.

Die generelle Funktionsweise von derartigen Doppelkupplungsgetrieben ist allgemein bekannt. Es sind hierbei zugkraftunterbrechungsfreie Schaltvorgänge möglich, indem ein getriebeeingangsseitiges Moment durch überschneidende Betätigung der Kupplungen 2.1, 2.2 von einem Teilgetriebe auf das andere Teilgetriebe übertragen werden.

Zwischen dem abtriebskonstanten Radsatz 10, 11 und einer getriebeausgangsseitigen Gehäusewand des Gehäuses 4 ist der Parksperrenmechanismus angeordnet. Dieser kann jedoch bspw. auch im Bereich des mittleren Lagerschildes angeordnet sein oder im Bereich des Getriebeeingangs. Ferner kann der Parksperrenmechanismus in gleicher Weise im Bereich einer mit der Getriebeausgangswelle 12 verbundenen Kardanwelle, einer hiermit verbundenen PTU-Einheit (für Allradantrieb) und/oder im Bereich eines Achsgetriebes (Differenzials) angeordnet sein.

Es versteht sich ferner, dass der Parksperrenmechanismus bevorzugt automatisiert betätigt wird, also nicht direkt mit einem Handschalthebel im Inneren des Kraftfahrzeuges gekoppelt ist. Vielmehr wird bspw. die Position eines solchen Handschalthebels erfasst. Sobald der Parksperrenmechanismus gelöst werden soll, wird dies erfasst, und es können erfindungsgemäße Schritte zur Dämpfung einer Entspannungsbewegung eingeleitet werden, wie sie insbesondere auftreten kann, wenn das Fahrzeug geneigt geparkt ist (insbesondere in Längsrichtung geneigt).

Wird nun das Fahrzeug 1 am Hang abgestellt und die Parksperre 6 eingelegt, so wird der Endtriebstrang durch das Drehmoment, das sich aufgrund der Hangabtriebskraft ergibt, belastet. Dieses Drehmoment stützt sich über das mit der Parksperre 6 in Eingriff stehende Sperrelement 25 am Getriebegehäuse 4 ab. Das Fahrzeug 1 ist somit sicher abgestellt. Infolge des wirkenden Drehmoments wird der Endtriebstrang tordiert und speichert somit potenzielle Energie. Wurde nun, wie bisher, die Parksperre 6 vom Fahrer ausgelegt bzw. entriegelt, so entspannt sich der Endtriebstrang schlagartig und beschleunigte dabei die mit der Abtriebswelle bzw. Getriebeausgangswelle 12 in Verbindung stehenden Getriebeteile stoßartig. Dies führte bisher zu einem prägnanten lauten schlagartigen Geräusch (Kaputtgeräusch). Um dies zu vermeiden, bleibt beim Abstellen am Hang und vor dem Einlegen der Parksperre 6 der zuletzt eingelegte Gang, dies kann der erste Gang oder der Rückwärts-Gang sein, geschaltet.

Durch den vorteilhaften den Einsatz der Getriebesteuerung kann die Verspannung und/oder die Längsneigung des Fahrzeugs sensorisch erkannt und daraufhin über die Getriebesteuerung mit Hilfe der zugehörigen Schaltkupplung der erste Gang oder der Rückwärts-Gang (oder ein anderer Gang, in der Regel jedoch ein Anfahrgang) eingelegt werden.

Wird nun die Parksperre 6 gelöst, so kann sich der Abtriebstrang entspannen. Hierbei ist jedoch durch den geschalteten Gang, in der Regel ein Anfahrgang, die zugehörige Kupplung ebenso mit der Abtriebswelle 12 gekoppelt. Diese Kopplung erfolgt jedoch nur in einem Bereich, unterhalb dessen ein Anfahrmoment übertragen wird. Demgemäß kann auch, wenn z.B. das Fahrzeug frontseitig bergan steht und Bergauffahrt beabsichtigt ist, ein Vorwärtsgang eingelegt werden und nach Lösen der Parksperre sofort mit diesem Gang gefahren werden. Gleiches gilt bei frontseitiger Bergabfahrt bzw. rückwärtsgerichteten Bergauf- und Bergabfahrten. Entscheidend ist in jedem Fall ein leichtes Anlegen derjenigen Kupplung, mit der der nächste Gang gefahren werden soll, zum Auslegen der Parksperre. Durch das natürliche Schleppmoment der Kupplung wird innerhalb des Getriebes 5 während der stoßartigen Beschleunigung der Getriebekomponenten eine Dämpfung erreicht. Dies führt zu einer deutlich geringeren und für den Fahrer angenehmeren Auslegeakustik. Das sogenannte Kaputtgeräusch kann verringert werden.

Nach einer anderen bevorzugten Variante wird die Entspannungsbewegung nicht nur passiv gedämpft, sondern es wird aktiv ein Gegenmoment aufgebaut.

Hierzu wird bei Erkennen eines Wunsches nach einem Lösen der Parksperrenanordnung eine Gangstufe in dem Getriebe eingelegt (wiederum bevorzugt eine Anfahrgangstufe). Ferner wird die der Gangstufe zugeordnete Kupplung der Doppelkupplung betätigt, und zwar so, dass diese Kupplung in einen Schlupfzustand (bevorzugt in der Nähe des Einrückpunktes bzw. Kisspoints) eingestellt wird. Der Motor 36 ist erfindungsgemäß ein Verbrennungsmotor, der im Leerlauf läuft. Demzufolge wird über die schlupfende Kupplung und die geschaltete Gangstufe eine Moment auf den Parksperrenmechanismus aufgebracht, das entgegengerichtet ist zu der Richtung der erwarteten Entspannungsbewegung.

Wird nun die Parksperre gelöst, ist der Abtriebsstrang bereits entlastet, so dass im Idealfall gar keine Entspannungsbewegung erfolgt. Das so genannte Kaputt-Geräusch kann hierdurch stark verringert bzw. vollständig eliminiert werden.

Die Kupplung wird bevorzugt auf ein Drehmoment eingestellt, das durch den Leerlaufregler des Motors ohne aktiven positiven Drehmomenteneingriff in die Motorsteuerung noch gut beherrscht werden kann. Ferner kann die Höhe des Drehmomentes auch an die Größe der Neigung des Kraftfahrzeuges angepasst werden (je stärker das Fahrzeug geneigt ist, umso stärker wird die Verspannung in dem Parksperrenmechanismus sein).

Ferner ist es vorteilhaft, dass die hierbei bereits eingelegte Gangstufe nach dem Lösen der Parksperre unmittelbar zum Anfahren verwendet werden kann. Hierzu muss die zuvor im Schlupfzustand befindliche Kupplung lediglich weiter geschlossen werden.

Insofern ist das erfindungsgemäße Verfahren auch zeitlich optimiert durchführbar.

Insgesamt kann die Auslegeakustik des Parksperrenmechanismus deutlich komfortabler ausgestaltet werden. Es treten bevorzugt keine Drehmomentrucke im Fahrzeug beim Lösen des Parksperrenmechanismus auf. Das bisher prägnante "Kaputt-Geräusch" tritt nicht mehr auf oder kann verringert werden.

Anstelle einer Beeinflussung des Getriebes und der zugeordneten eingangsseitigen Trennkupplung(en) kann der Antriebsstrang zur Verringerung der Akustik beim Lösen der Parksperrenanordnung auch an anderer Stelle mit einem Schleppmoment (Bremsmoment) oder einem Gegenmoment beaufschlagt werden. Dies kann bspw. an der Kardanwelle oder im jeweiligen Achsgetriebe erfolgen. Bei Hybridantrieben ist die Möglichkeit gegeben, die im Antriebsstrang angeordnete elektrische Maschine auf ein definiertes Drehmoment zu stellen und somit den Abtriebsstrang zu dämpfen. Die Höhe des Drehmomentes darf dabei das Fahrzeug jedoch nicht in Bewegung setzen.

## Patentansprüche

1. Verfahren zur Steuerung eines automatisierten Antriebsstrangs für Kraftfahrzeuge (1), wobei der Antriebsstrang ein Getriebe (5) mit mindestens einer Getriebeeingangswelle (3.1 bzw. 3.2) aufweist, die mit einem Motor (36) des Kraftfahrzeugs (1) und mit einer Getriebeausgangswelle (12) verbindbar ist, die mit Antriebsrädern des Kraftfahrzeugs (1) verbunden werden kann, wobei der Antriebsstrang einen Parksperrenmechanismus (32) aufweist, mittels dessen eine Verbindung zwischen Antriebsstrang und einem feststehenden Abschnitt (4) des Kraftfahrzeugs eingerichtet werden kann, wobei der Antriebsstrang vor und/oder während eines Deaktivierungsvorgangs des Parksperrenmechanismus (32) so angesteuert wird, dass eine sich hierbei im Antriebsstrang aufbauende Entspannungsbewegung gedämpft, reduziert oder verhindert wird, wobei der Antriebsstrang den als Verbrennungsmotor gebildeten Motor aufweist, der über eine Kupplung mit dem Getriebe verbindbar ist, wobei bei laufendem Verbrennungsmotor die Kupplung (2) schlupfend betätigt wird,
**dadurch gekennzeichnet, dass** der Schlupf der Kupplung in Abhängigkeit von der Neigung des Kraftfahrzeuges angepasst wird.

2. Verfahren nach Anspruch 1, **dadurch gekennzeichnet, dass** eine vor und/oder während des Deaktivierungsvorgangs des Parksperrenmechanismus (32) auftretende Entspannungsbewegung durch Einlegen einer Gangstufe des Getriebes gedämpft wird.

3. Verfahren nach Anspruch 1, **dadurch gekennzeichnet, dass** vor und/oder während des Deaktivierungsvorgangs des Parksperrenmechanismus (32) eine Gangstufe des Getriebes eingelegt wird und dadurch der Parksperrenmechanismus (32) mit dem über die Kupplung (2) eingeleiteten Gegenmoment beaufschlagt wird.

4. Verfahren nach einem der Ansprüche 2 bis 3, **dadurch gekennzeichnet, dass** je nach Richtung der auftretenden Entspannungsbewegung oder Verspannungsenergie eine Rückwärts- oder -Vorwärtsgangstufe des Getriebes eingelegt wird.

5. Verfahren nach einem der Ansprüche 1 bis 4, **dadurch gekennzeichnet, dass** die Kupplung (2) mit Hilfe einer Getriebesteuerung so betätigt wird, dass sie in einen Schlupfzustand versetzt wird.

6. Verfahren nach einem der Ansprüche 1 bis 4, **dadurch gekennzeichnet, dass** die Kupplung so betätigt wird, dass das Gegenmoment über den im Leerlauf laufenden Verbrennungsmotor (36) erzeugt werden kann, ohne dass in dessen Leerlaufregelung eingegriffen werden muss.

7. Verfahren nach einem der Ansprüche 1 bis 6, wobei der Antriebsstrang ein Doppelkupplungsgetriebe (5) oder ein automatisiertes Schaltgetriebe mit der wenigstens einen Getriebeeingangswelle (3.1, 3.2) aufweist, die über die getriebeeingangsseitige Kupplung (2.1, 2.2) mit dem Verbrennungsmotor (36) des Kraftfahrzeugs (1) und über jeweilige durch Schaltkupplungen (K3 - K6) einlegbare Gangstufen mit der Getriebeausgangswelle (12) verbindbar ist, wobei der Antriebsstrang den Parksperrenmechanismus (32) aufweist, mittels dessen eine formschlüssige Verbindung zwischen Antriebsstrang und einem feststehenden Abschnitt des Kraftfahrzeugs eingerichtet werden kann, und wobei vor und/oder während des Deaktivierungsvorgangs des Parksperrenmechanismus (32) eine Gangstufe eingelegt wird, so dass eine sich bei dem Deaktivierungsvorgang im Antriebsstrang aufbauende Entspannungsbewegung durch Schleppmomente an der getriebeeingangsseitigen Kupplung (2.1, 2.2) gedämpft oder reduziert wird.

8. Verfahren nach Anspruch 7, **dadurch gekennzeichnet, dass** die getriebeeingangsseitige Kupplung so betätigt wird, dass ein Schleppmoment über den im Leerlauf laufenden Verbrennungsmotor (36) erzeugt werden kann.

9. Verfahren nach Anspruch 7 oder 8, **dadurch gekennzeichnet, dass** die Betätigung der Kupplung an die Größe einer Neigung des Kraftfahrzeuges angepasst werden kann.

10. Verfahren nach einem der Ansprüche 7 bis 9, **dadurch gekennzeichnet, dass** je nach Richtung der auftretenden Entspannungsbewegung oder Verspannungsenergie eine Rückwärts- oder -Vorwärtsgangstufe des Getriebes eingelegt wird, wobei der Antriebsstrang eine elektrische Maschine aufweist, die das Schleppmoment zumindest teilweise erzeugt.

## Claims

1. Method for controlling an automated drive train for motor vehicles (1), wherein the drive train has a transmission (5) with at least one transmission input shaft (3.1 or 3.2) which can be connected to an engine (36) of the motor vehicle (1) and to a transmission output shaft (12) which can be connected to driven wheels of the motor vehicle (1), wherein the drive train has a parking lock mechanism (32) by means of which a connection can be set up between the drive train and a fixed section (4) of the motor vehicle, wherein the drive train is actuated before and/or during a deactivation process of the parking lock mechanism (32) in such a way that a stress-relieving movement which builds up in the drive train in this context is damped, reduced or prevented, wherein the drive train has the engine which is embodied as an internal combustion engine and can be connected to the transmission via a clutch, wherein the clutch (2) is activated in a slipping fashion when the internal combustion engine is running,
**characterized in that** the slip of the clutch is adapted as a function of the inclination of the motor vehicle.

2. Method according to Claim 1, **characterized in that** a stress-relieving movement which occurs before and/or during the deactivation process of the parking lock mechanism (32) is damped by engaging a gearspeed of the transmission.

3. Method according to Claim 1, **characterized in that** a gearspeed of the transmission is engaged before and/or during the deactivation process of the parking lock mechanism (32) and as a result the opposing torque, which is input via the clutch (2) is applied to the parking lock mechanism (32).

4. Method according to one of Claims 2 to 3, **characterized in that** depending on the direction of the stress-relieving movement or stress-applying energy which occurs a reverse gearspeed or forward gearspeed of the transmission is engaged.

5. Method according to one of Claims 1 to 4, **characterized in that** the clutch (2) is activated with the aid of a transmission controller in such a way that it is placed in a slipping stage.

6. Method according to one of Claims 1 to 4, **characterized in that** the clutch is activated in such a way that the opposing torque can be generated by means of the internal combustion engine (36) which is running in the idling mode, without having to engage in the idling control thereof.

7. Method according to one of Claims 1 to 6, wherein the drive train has a double clutch transmission (5) or an automated transmission with the at least one transmission input shaft (3.1, 3.2) which can be connected via the transmission-input-side clutch (2.1, 2.2) to the internal combustion engine (36) of the motor vehicle (1) and to the transmission output shaft (12) via respective gearspeeds which can be engaged by clutches (K3 - K6), wherein the drive train has the parking lock mechanism (32) by means of which a positively locking connection can be set up between the drive train and a fixed section of the motor vehicle, and wherein a gearspeed is engaged before and/or during the deactivation process of the parking lock mechanism (32), with the result that a stress-relieving movement which builds up in the drive train during the deactivation process is damped or reduced by drag torques at the transmission-input-side clutch (2.1, 2.2).

8. Method according to Claim 7, **characterized in that** the transmission-input-side clutch is activated in such a way that a drag torque can be generated by means of the internal combustion engine (36) which is running in the idling mode.

9. Method according to Claim 7 or 8, **characterized in that** the activation of the clutch can be adapted to the magnitude of inclination of the motor vehicle.

10. Method according to one of Claims 7 to 9, **characterized in that** depending on the direction of the stress-relieving movement or stress-applying energy which occurs a reverse gearspeed or forward gearspeed of the transmission is engaged, wherein the drive train has an electric machine which at least partially generates the drag torque.

## Revendications

1. Procédé de commande d'un train d'entraînement automatisé pour véhicules automobiles (1), le train d'entraînement présentant une boîte de vitesses (5) avec au moins un arbre d'entrée de boîte de vitesses (3.1 respectivement 3.2), qui peut être connecté à un moteur (36) du véhicule automobile (1) et à un arbre de sortie de boîte de vitesses (12), qui peut être connecté aux roues motrices du véhicule automobile (1), le train d'entraînement présentant un mécanisme de verrouillage de stationnement (32), au moyen duquel une connexion entre le train d'entraînement et une portion fixe (4) du véhicule automobile peut être réalisée, le train d'entraînement, avant et/ou pendant une opération de désactivation du mécanisme de verrouillage de stationnement (32), étant commandé de telle sorte qu'un mouvement de détente se formant dans ce cas dans le train d'entraînement soit amorti, réduit ou empêché, le train d'entraînement présentant le moteur formé en tant que moteur à combustion interne, qui peut être connecté par le biais d'un embrayage à la boîte de vitesses, l'embrayage (2) étant actionné en mode de glissement lorsque le moteur à combustion interne tourne,
**caractérisé en ce que** le glissement de l'embrayage est adapté en fonction de l'inclinaison du véhicule automobile.

2. Procédé selon la revendication 1, **caractérisé en ce qu'**un mouvement de détente se produisant avant et/ou pendant l'opération de désactivation du mécanisme de verrouillage de stationnement (32) est amorti par l'enclenchement d'un rapport de vitesse de la boîte de vitesses.

3. Procédé selon la revendication 1, **caractérisé en ce qu'**avant et/ou pendant l'opération de désactivation du mécanisme de verrouillage de stationnement (32), un rapport de vitesse de la boîte de vitesses est enclenché et de ce fait le mécanisme de verrouillage de stationnement (32) est sollicité avec le couple opposé introduit par le biais de l'embrayage (2).

4. Procédé selon l'une quelconque des revendications 2 à 3, **caractérisé en ce qu'**en fonction de la direction du mouvement de détente se produisant ou de l'énergie de serrage, un rapport de vitesse de marche arrière ou de marche avant de la boîte de vitesses est enclenché.

5. Procédé selon l'une quelconque des revendications 1 à 4, **caractérisé en ce que** l'embrayage (2) est actionné à l'aide d'une commande de boîte de vitesses de telle sorte qu'il soit amené dans un état de glissement.

6. Procédé selon l'une quelconque des revendications 1 à 4, **caractérisé en ce que** l'embrayage est actionné de telle sorte que le couple opposé puisse être produit par le biais du moteur à combustion interne (36) tournant en marche à vide, sans qu'il ne faille intervenir dans sa régulation de marche à vide.

7. Procédé selon l'une quelconque des revendications 1 à 6, dans lequel le train d'entraînement présente une boîte de vitesses à double embrayage (S) ou une boîte de vitesses à changement de vitesse automatisée avec l'au moins un arbre d'entrée de boîte de vitesses (3.1, 3.2), qui peut être connecté par le biais de l'embrayage du côté de l'entrée de la boîte de vitesses (2.1, 2.2) au moteur à combustion interne (36) du véhicule automobile (1) et par le biais de rapports de vitesse pouvant être enclenchés respectivement par des embrayages de changement de vitesses (K3 - K6) à l'arbre de sortie de boîte de vitesses (12), le train d'entraînement présentant le mécanisme de verrouillage de stationnement (32) au moyen duquel une liaison par engagement par correspondance de forme entre le train d'entraînement et une portion fixe du véhicule automobile peut être réalisée, et avant et/ou pendant l'opération de désactivation du mécanisme de verrouillage de stationnement (32) un rapport de vitesse étant enclenché, de telle sorte qu'un mouvement de détente se produisant lors de l'opération de désactivation dans le train d'entraînement soit amorti ou réduit par des couples d'entraînement au niveau de l'embrayage du côté de l'entrée de la boîte de vitesses (2.1, 2.2).

8. Procédé selon la revendication 7, **caractérisé en ce que** l'embrayage du côté de l'entrée de la boîte de vitesses est actionné de telle sorte qu'un couple d'entraînement puisse être produit par le biais du moteur à combustion interne (36) tournant en marche à vide.

9. Procédé selon la revendication 7 ou 8, **caractérisé en ce que** l'actionnement de l'embrayage peut être adapté à l'amplitude d'une inclinaison du véhicule automobile.

10. Procédé selon l'une quelconque des revendications 7 à 9, **caractérisé en ce qu'**en fonction de la direction du mouvement de détente se produisant ou de l'énergie de serrage, un rapport de vitesse de marche arrière ou de marche avant de la boîte de vitesses est enclenché, le train d'entraînement présentant une machine électrique qui produit au moins en partie le couple d'entraînement.
